# EUROPEAN PATENT APPLICATION

(11) **EP 2 196 498 A1**
(43) Date of publication of application: **16.06.2010**
(21) Application number: 09178299.5
(22) Date of filing: 08.12.2009
(51) Int. Cl.: C08L 23/08

(54) **Lightweight modeling composition**

(30) Priority: 09.12.2008 US 201371 P; 14.09.2009 US 559272
(71) Applicant: Charlie-Kao Industry Co. Ltd., 23152 Taipei Hsien (TW)
(72) Inventor: Kao, Tseng-Chi, 23152, Taipei (TW)
(74) Representative: Makovski, Priscilla Mary

(57) **Abstract**

The present invention relates to water-based and water-free, lightweight modeling compositions comprising a filler made of EVA foam particles and a water-based or water-free matrix. Advantageously, the modeling composition has little to no shrinkage over time and it has an increased product life.

## Description

### CROSS REFERENCE TO RELATED APPLICATIONS

This application claims the priority of U.S. Provisional Application No. 61/201,371 filed on December 9, 2008, the entire contents of which are incorporated herein by reference.

### FIELD OF THE INVENTION

The present invention relates to improved water-based and water-free modeling compositions comprising a filler made of ethyl vinyl acetate ("EVA") foam particles. The modeling compositions form a solid, lightweight, durable product.

### BACKGROUND OF THE INVENTION

Modeling compositions are commonly used in the arts and crafts, toy and educational fields. A common modeling composition is clay which is of mineral origin, is either water-based or oil-based, and is generally considered a heavyweight modeling composition. Other common modeling compositions include vegetable, starch, or gel based compositions such as Play Doh®, which is typically used by children. Another type of modeling composition known in the art includes polymer based compositions. Polymer based compositions are generally considered lightweight modeling compositions.

Lightweight modeling compositions have recently become more popular than heavyweight compositions because they can be molded more easily. However, the lightweight modeling compositions known in the art tend to shrink over time. In addition, lightweight modeling compositions tend to dry out causing the molded article to become brittle and break or otherwise lose its shape which results in a lightweight modeling composition having a brief product life. Therefore, a need exists for a lightweight composition that does not shrink over time and has a longer product life.

### BRIEF SUMMARY

The present invention provides water-based and water-free modeling compositions and methods of making the modeling compositions. An embodiment of a water-based modeling composition comprises EVA foam particles, polyvinyl alcohol, a cross-linking agent, a plasticizer, and water. The modeling composition may further comprise a wetting agent and optionally, a preservative. This embodiment comprises about 15% to about 35% of EVA foam particles, about 5% to about 20% of polyvinyl alcohol, about 0.1% to about 1.8% of borate salt, about 5% to about 20% of plasticizer, about 40% to about 60% of water, about 0.5% to about 2.0% of wetting agent, and about 0.1% to about 1.0% of preservative by weight of the total composition.

A method of making a water-based modeling composition comprises mixing polyvinyl alcohol powder with cold water at a speed of about 80 to about 100 rpm; allowing the fully mixed polyvinyl alcohol solution to rest for about one hour; heating the polyvinyl alcohol solution to about 80°C for about one hour; cooling the alcohol solution to about 30-40°C; mixing a wetting agent, and optionally a preservative, with the alcohol solution to obtain a gel, mixing the EVA foam particles with the gel for about 30 minutes at a speed of about 20 to about 30 rpm to form a homogeneous mixture; stirring borax into the homogeneous mixture to cross-link the polyvinyl alcohol to obtain a water-based matrix; and kneading the resulting water-based matrix to form the modeling composition.

An embodiment of a water-free modeling composition comprises EVA foam particles and polybutene. This embodiment comprises about 40% to about 70% EVA foam particles and about 30% to about 60% polybutene.

A method of making a water-free modeling composition comprises crushing polybutene having a high molecular weight, mixing the crushed polybutene with polybutene having a low molecular weight to make a water-free matrix, and mixing the EVA foam particles into the water-free matrix to form the modeling composition.

Advantageously, the water-based and the water-free modeling compositions have improved pliability such that the modeling composition can be molded into various shapes without breaking apart or otherwise becoming loose. Another advantage is that the molded article made from the water-based or water-free modeling composition preserves its original shape and size because the modeling composition has little to no shrinkage over time. In addition, the modeling composition has improved stability during storage, wet ductility, ability to join separated parts of the composition to form shapes, color stability, and elasticity.

Another advantage of the water-free modeling composition is that it will not air dry, even after modeling or sculpting. As a result, the water-free modeling composition has an increased useful product life relative to a water-based modeling composition.

### DETAILED DESCRIPTION

The water-based modeling composition comprises filler, polyvinyl alcohol, a cross-linking agent, a plasticizer, and water.

The filler can be, for example, EVA foam particles which are present in an amount from about 15% to about 35% by weight. If the amount of EVA foam particles is less than about 15%, the modeling composition is sticky and too loose to create three-dimensional shapes or to be used to decorate other articles. If the amount of EVA foam particles is greater than about 35%, the modeling composition is weak and tends to break apart too easily when an external force is exerted.

The EVA foam particles are made from closed-cell foam comprising ethyl vinyl acetate and blended copolymers. As a result, the EVA foam particles have a high level of chemical cross-linking that provides a semi-rigid product having a fine uniform cell structure. In particular, the EVA foam particles are lightweight and highly resilient, have good buoyancy in a water system, and have a smooth surface. Moreover, unlike other filler materials such as expanded polystyrene foam, EVA foam particles have pores that allow the penetration of either a water-free matrix such as polybutene or a water-based matrix such as the polyvinyl alcohol solution into the EVA foam particles. As a result, the EVA foam particles do not separate from the polyvinyl alcohol solution thereby creating a more homogeneous modeling composition. In addition, the EVA foam particles have a shape that may be either regular or irregular, the latter being the preferred shape. The diameter of the EVA foam particles is from about 2 mm to about 20 mm, preferably from about 2 mm to about 10 mm, and most preferably from about 6 mm to about 8 mm. The density of the EVA foam particles is from about 0.03 g/cm³ to about 0.40 g/cm³. A cutter machine may be used to chop the EVA foam particles to obtain the desired diameter and shape.

While not wishing to be bound by any particular theory, it is believed that the increased product life of the modeling composition is due the penetration of the water-free or water-based matrix into the pores in the EVA foam particles. In particular, the water-free modeling composition may never dry out because there is no water that can be lost to the environment. Although the water-based modeling composition may dry out eventually, it will take much longer to dry out because the water-based matrix that penetrates the pores of the EVA foam particles is insulated from the environment reducing the exposure of the water-free matrix to the air.

The polyvinyl alcohol is present in an amount from about 5% to about 20% by weight, more preferably from about 8% to about 12%. If the amount of polyvinyl alcohol is less than about 5%, the modeling composition has insufficient plasticity and ductility. If the amount of polyvinyl alcohol is greater than about 20%, the modeling composition becomes too hard, reducing its workability and its pliable feel within the user's hands.

The polyvinyl alcohol used in the present invention may be fully hydrolyzed or partially hydrolyzed. Typically, partially hydrolyzed polyvinyl alcohol has a degree of hydrolysis from about 80% to about 95 % mole, preferably from about 86% to about 89% mole. Preferably, the polyvinyl alcohol is a modified polyvinyl alcohol that has a viscosity from about 4 cps to about 10 cps when measured as a 4% aqueous solution at 20°C.

The plasticizer is present in an amount from about 5 to about 20% by weight, preferably from about 5% to about 15%. The plasticizer is used to plasticize the polyvinyl alcohol resin and prevent the modeling composition from becoming brittle. Adding too much plasticizer, however, may cause the modeling composition to become tacky. Examples of suitable plasticizers include, without limitation, glycerin, propylene glycol, ethylene glycol, glyceryl triacetate, triethyl citrate, and other plasticizers known to those skilled in the art. A preferred plasticizer is glycerine.

The cross-linking agent is present in an amount from about 0.1 % to about 1.8% by weight. Examples of suitable cross-linking agents include, without limitation, borate salts such as sodium borate and sodium tetraborate, copper salts such as copper chloride, boric acid, galactose dialdehyde borate salt, combinations thereof, and other cross-linking agents known to those skilled in the art. A preferred cross-linking agent is a borate salt such as sodium borate or sodium tetraborate (borax).

The water is present in an amount from about 40% to about 60% by weight, more preferably about 45% to about 50%.

In another embodiment of the present invention, the water-based modeling composition further comprises a wetting agent and optionally a preservative.

The wetting agent is present in an amount from about 0.5% to about 2.0% by weight. It is used to reduce the surface tension of the EVA foam particles to promote the penetration of the polyvinyl alcohol solution into the pores of the EVA foam particles that leads to an increase in the density of the EVA foam particles. As a result of this increase in the density of the EVA foam particles, the foam particles are dispersed more homogeneously throughout the modeling composition to prevent the EVA foam particles from separating from the water-based matrix during storage or prolonged periods of time. Examples of suitable wetting agents include, without limitation, sodium dioctyl sulfosuccinate, lecithin, sodium lauryl sulfate, cetyl alcohols, polysorbates, quarternary ammonium salts, and other wetting agents known to those skilled in the art. A preferred wetting agent is sodium dioctyl sulfosuccinate.

Optionally, a preservative may be added to the modeling composition in an amount from about 0.1 % to about 1.0% by weight to prevent the growth of undesirable organisms such as mold and bacteria. Examples of suitable preservatives include, without limitation, diazolidinyl urea, methylparaben, propylparaben, 1-(3-chloroallyl)-3,5,7-triaza-1-azoniaadamantane chloride which is sold by The Dow Chemical Company under the trade name Dowicil 75, metal sorbates such as potassium sorbate, behentrimonium methosulfate, and other preservatives known to those skilled in the art. A preferred preservative is propylparaben, 1-(3-chloroallyl)-3,5,7-triaza-1-azoniaadamantane chloride (Dowicil 75).

The water-free modeling compositions comprise a filler in an amount between about 40% and about 70% by weight (hereinafter "w/w") such as EVA foam particles and a water-free matrix in an amount between about 30% and about 60% w/w. The water-free matrix is capable of binding to the filler to form a modeling composition having the characteristics described above. Examples of suitable water-free matrices include, without limitation, polybutene, polyisobutylene (commonly known as butyl rubber), and other water-free matrices known to those skilled in the art.

An embodiment of the water-based modeling composition of the present invention is shown in Example 1 below:

**Example 1**

| **Components** | **Amount** |
|---|---|
| Water | 520 grams |
| Polyvinyl alcohol | 104 grams |
| Glycerin | 104 grams |
| Preservative | 2 grams |
| EVA foam particles (6 to 8 mm diameter) | 260 grams |
| Wetting agent | 5 grams |
| Borax | 16 grams |

A method of making the modeling composition comprises:
1. Mixing cold water and polyvinyl alcohol powder at a speed of about 80 rpm to about 100 rpm to form an alcohol mixture and let it rest for about one hour.
2. Heating the alcohol mixture to about 80 C and maintain for about one hour.
3. Allowing the alcohol mixture to cool to about 30-40°C.
4. Mixing the glycerin into the alcohol mixture to obtain a gel.
5. Admixing EVA foam particles into the alcohol mixture at a speed of about 20 rpm to about 30 rpm for about 30 minutes to obtain a homogeneous mixture.
6. Stirring borax into the homogeneous mixture to obtain a water-based matrix.
7. Kneading the water-based matrix to obtain the modeling composition.

Optionally, the preservative and/or the wetting agent may be mixed together with the glycerin to obtain a gel.

Another embodiment of the water-based modeling composition of the present invention is shown in Example 2 below:

**Example 2**

| **Batch 1 Components** | **Amount** |
|---|---|
| Water | 3,620 grams |
| Polyvinyl alcohol | 540 grams |
| Glycerin | 830 grams |
| Preservative | 10.4 ml |

Water, polyvinyl alcohol, glycerin, and preservative were mixed to obtain a PVA mixture. The PVA mixture was heated to about 80°C until the polyvinyl alcohol powder was completely dissolved. The PVA mixture was cooled to about 30-40°C and set aside.

| **Batch 2 Components** | **Amount** |
|---|---|
| Water | 1,360 grams |
| Borax | 34 grams |

Water and borax were mixed to obtain a borax mixture. The borax mixture was heated to about 60°C until a clear solution is obtained.

The PVA mixture of Batch 1 was transferred into a container and the wetting agent was added to the PVA mixture. EVA foam particles in an amount of about 1.2 kg and having a diameter between about 6 to about 8 mm were added to the PVA mixture. The PVA mixture with the EVA foam particles was stirred to disperse the EVA foam particles homogeneously. The borax mixture of Batch 2 was combined with the PVA mixture with the EVA foam particles to form a combined mixture. The combined mixture was stirred for about 20-30 minutes to disperse the EVA foam particles homogeneously.

An embodiment of the water-free modeling composition is shown in Example 3 below:

**Example 3**

| **Components** | **Amount (% w/w)** |
|---|---|
| Polybutene | 400 grams |
| EVA foam particles | 600 grams |

The water-free modeling composition in Example 3 was made by crushing polybutene having a high molecular weight, mixing the crushed polybutene with polybutene having a low molecular weight to make a water-free matrix. During the mixing of the crushed polybutene and the low-molecular weight polybutene, the low-molecular weight polybutene is added slowly until the water-free matrix has the characteristics of a gel and it does not stick to the hands. EVA foam particles are mixed into the water-free matrix to form the modeling composition.

It will be apparent to those skilled in the art that changes and modifications may be made in the embodiments illustrated herein, without departing from the spirit and the scope of the invention. Thus, the invention is not to be limited to the particular forms herein shown and described except insofar as indicated by the scope of the following claims.

## Claims

1. A modeling composition comprising:
a matrix; and
a filler consisting essentially of ethyl vinyl acetate foam particles.

2. The modeling composition of claim 1 wherein the matrix is a water-based matrix comprising:
a polyvinyl alcohol in an amount from about 5% to about 20% w/w;
a cross-linking agent in an amount from about 0.1% to about 1.8% w/w;
a plasticizer in an amount from about 5% to about 20% w/w; and
water in an amount from about 40% to about 60% w/w.

3. The modeling composition of claim 2 further comprising a preservative in an amount from about 0.1 % to about 1.0% w/w.

4. The modeling composition of claims 2 or 3 further comprising a wetting agent in an amount from about 0.5% to about 2.0% w/w.

5. The modeling composition of claim 3 further comprising a wetting agent in an amount of about 0.5% w/w and wherein:
the polyvinyl alcohol is present in an amount of about 10.4% w/w;
the filler is present in an amount of about 26% w/w;
the cross-linking agent is present in an amount of about 1.5% w/w;
the plasticizer is present in an amount of about 10.4% w/w;
the preservative is present in an amount of about 0.2% w/w; and
the water is present in an amount of about 51 % w/w.

6. The modeling composition of claims 2, 3, 4, or 5 wherein the polyvinyl alcohol is selected from a group consisting of fully hydrolyzed polyvinyl alcohol, partially hydrolyzed polyvinyl alcohol, and combinations thereof.

7. The modeling composition of claims 3, 4, 5, or 6 wherein the preservative consists essentially of 1-(3-chloroallyl)-3,5,7-triaza-1-azoniaadamantane chloride.

8. The modeling composition of claims 4, 5, 6, or 7 wherein the wetting agent consists essentially of sodium dioctyl sulfosuccinate.

9. The modeling composition of any one of claims 2 through 8 wherein the polyvinyl alcohol is partially hydrolyzed polyvinyl alcohol having a degree of hydrolysis from about 86% to about 89% mole.

10. The modeling composition of any one of claims 2 through 9 wherein the cross-linking agent consists essentially of borax.

11. The modeling composition of any one of claims 2 through 10 wherein the plasticizer consists essentially of glycerin.

12. The modeling composition of claim 1 wherein the matrix is a water-free matrix selected from a group consisting of polybutene, polyisobutylene, and combinations thereof.

13. The modeling composition of claim 12 wherein the filler is present in an amount from about 40% to about 70% w/w and the water-free matrix is present in an amount from about 30% to about 60% w/w.

14. The modeling composition of any one of claims 1 through 13 wherein the ethyl vinyl acetate foam particles have a diameter from about 2 mm to about 20 mm.

15. The modeling composition of any one of claims 1 through 14 wherein the ethyl vinyl acetate foam particles have a density from about 0.03 g/cm³ to about 0.40 g/cm³.
